# EUROPÄISCHE PATENTSCHRIFT

(11) **EP 0 479 035 B1**
(45) Veröffentlichungstag und Bekanntmachung des Hinweises auf die Patenterteilung: **20.12.1995**
(21) Anmeldenummer: 91115772.5
(22) Anmeldetag: 17.09.1991
(51) Int. Cl.: H02K 3/52, H02K 5/22

(54) **Elektromotor mit Anschlusssteckverbindung**
Electric motor with connection plug
Moteur électrique avec raccordement à fiche

(30) Priorität: 04.10.1990 DE 4031440
(43) Veröffentlichungstag der Anmeldung: 08.04.1992
(73) Patentinhaber: ebm Elektrobau Mulfingen GmbH & Co., D-74671 Mulfingen (DE)
(72) Erfinder: Best, Dieter, W-7118 Ingelfingen (DE)
(74) Vertreter: Patentanwälte Dr. Solf & Zapf

(56) Entgegenhaltungen:
- EP-A- 0 001 908
- DE-A- 2 161 930
- DE-A- 2 219 764
- DE-U- 6 910 086
- FR-A- 2 459 572
- GB-A- 2 196 489

## Beschreibung

Die vorliegende Erfindung betrifft einen Elektromotor mit einem aus einem Statorblechpaket sowie in Nuten des Statorblechpaketes angeordneten Wicklungen bestehenden Stator und mit einer Steckverbindungsanordnung zum Verschalten von Drahtenden der Wicklungen mit Motor-Anschlußleitern, wobei die Steckverbindungsanordnung aus Isoliermaterial bestehende und elektrische Verbinderelemente halternde Halteteile aufweist und jedes Halteteil im zwischen den Wicklungen liegenden Bereich einer der Nuten in einer von Isolier-Endscheiben gebildeten Einsteckaufnahme angeordnet ist, und wobei an den Verbinderelementen einerseits die Drahtenden angeschlossen und andererseits die Ahschlußleiter über Steckverbindungen anschließbar sind.

Aus der DE-U-69 10 086 ist ein gattungsgemäßer Motor bzw. eine "Steckverbindung für die elektrischen Anschlüsse einer Statorwicklung in einer kleineren elektrischen Maschine an externe Leitungen" bekannt. Hierbei wird ein im wesentlichen plattenförmiges Halteteil verwendet, für das an der Innenseite des Statorjochs axial verlaufende Führungen geschaffen sind. Dieses Halteteil weist eine dünne Grundplatte auf, auf der Rippen zur Trennung weitgehend freiliegender elektrischer Verbinderelemente befestigt sind. Die beiden den Isolator bildenden Isolier-Endscheiben sind jeweils im Bereich der Nuten getrennt und haben einen inneren und einen äußeren am Magnetring gelegenen Isoliersteg. In den außen gelegenen, gegenüberliegenden Isolierstegen sind Einsteckaufnahmen für die Ränder der Grundplatte gebildet, wobei die Grundplatte durch jeweils einen Anschlag (Querwand bzw. Anschlagzapfen) am Magnetring fixiert ist. Hierbei ist jedoch nachteilig, daß das Halteteil nur als Platte ausgeführt ist, die in Führungen der Isolatorteile geführt ist, da - falls die Maße der Platte oder des Abstandes der außen gelegenen Isolierstege von den notwendigen Maßen abweichen - das Halteteil nicht mehr ausreichend fixiert ist.

Aus der DE-OS 29 24 906 ist ein als Außenläufermotor ausgebildeter Elektromotor bekannt, bei dem ein Halteteil der Steckverbindungsanordnung unmittelbar in die Nut eingesetzt ist und dabei den freien Nutraum ausfüllt sowie die Wicklungen in ihrer Form hält. Dies kann aber insofern zu Problemen führen, als das Halteteil aufgrund der bei den Wicklungen auftretenden Maßtoleranzen nicht in allen Fällen gut fixiert in der Nut sitzt oder aber nur sehr schwer in die Nut eingeschoben werden kann. Insbesondere axiale Bewegungen der Halteteile mit den Verbinderelementen müssen aber auf jeden Fall deshalb vermieden werden, weil hierdurch die angeschlossenen Drahtenden der Wicklungen abbrechen könnten. Andererseits ist aber ein bestimmtes Spiel erforderlich, um eine einfache und schnelle Montage zu ermöglichen.

Aus der DE-OS 22 19 764 ist ein als Innenläufermotor ausgebildeter Elektromotor bekannt. Bei diesem Motor sitzen Halteteile lediglich lose in den Nuten, oder aber - in weiteren Ausführungsformen - sie umgreifen das Statorblechpaket von einer Stirnseite her. Auch hier ist die Halterung der Halteteile an dem Stator nicht optimal.

Der vorliegenden Erfindung liegt daher die Aufgabe zugrunde, bei einem gattungsgemäßen Motor die Steckverbindungsanordnung so zu verbessern, daß eine einfache, schnelle und damit kostengünstige Montage bei gleichzeitig stets optimaler Fixierung der Halteteile möglich ist.

Erfindungsgemäß wird dies dadurch erreicht, daß die Isolier-Endscheiben jeweils aus einem auf einer Stirnseite des Statorblechpaketes aufliegenden Scheibenabschnitt und aus in axialer Richtung in die Nuten eingreifenden und diese auskleidenden Isolierstegen bestehen, wobei die Isolierstege zur Bildung der Einsteckaufnahmen für die Halteteile axial verlaufende und sich etwa radial, parallel zueinander in die Nuten erstreckende Führungsstege aufweisen und die Halteteile formschlüssig in den Einsteckaufnahmen gehaltert sind.

Erfindungsgemäß wird durch spezielle Ausgestaltung der Isolier-Endscheiben für jedes Halteteil praktisch eine kammerartige Einsteckaufnahme geschaffen, in die ein erfindungsgemäßes Halteteil formschlüssig einsteckbar ist. Dies liegt hauptsächlich daran, daß erfindungsgemäß die inneren Isolierstege weit in den Bereich der Nuten geführt sind und zusammen mit den Führungsstegen kammerartige, formschlußfähige Einsteckaufnehmen bilden. Da die Einsteckaufnahmen hinsichtlich ihrer Maße sehr genau an die Abmessungen der Halteteile angepaßt werden können, ist die Fixierung der Halteteile vorteilhafterweise bei jedem Motor-Exemplar stets gleich gut, d.h. die Fixierung ist unabhängig von Maßtoleranzen im Bereich der Wicklungen.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll die Erfindung im folgenden näher erläutert werden. Dabei zeigen:
- Fig. 1: einen Axialschnitt durch einen erfindungsgemäßen, als Innenläufermotor ausgebildeten Elektromotor, der hier beispielhaft als Antriebsmotor eines Ventilators Verwendung findet,
- Fig. 2: eine bereichsweise axial geschnittene Seitenansicht des Stators des erfindungsgemäßen Motors,
- Fig. 3: eine Stirnansicht des Stators in Pfeilrichtung III gemäß Fig. 2,
- Fig. 4: eine vergrößerte Darstellung des Bereichs IV in Fig. 3,
- Fig. 5: eine vergrößerte Perspektivdarstellung eines mit Verbinderelementen bestückten Halteteils aus dem Bereich V in Fig. 3 und
- Fig. 6: eine gegenüber Fig. 5 vergrößerte Draufsicht in Pfeilrichtung VI auf die Verbinderelemente mit einem angeschlossenen Wicklungsdrahtende.

In den verschiedenen Figuren der Zeichnung sind gleiche Teile stets mit den gleichen Bezugsziffern bezeichnet und werden daher in der Regel nur jeweils einmal beschrieben.

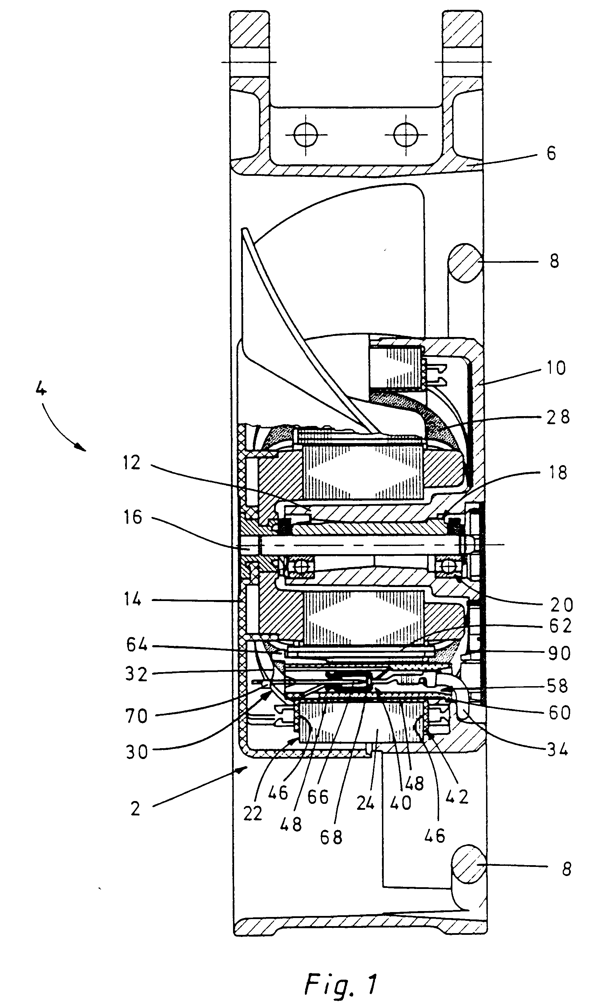

Gemäß Fig. 1 bildet ein erfindungsgemäßer Elektromotor 2 den Antriebsmotor eines Ventilators 4, der einen äußeren Wandring 6 sowie einen über radiale Speichen 8 zentrisch gehalterten Motorflansch 10 aufweist. Der Motorflansch 10 weist ein Lagertragrohr 12 auf, in dem ein Läufer 14 über eine Läuferwelle 16 sowie über Gleitlager 18 (obere Hälfte in Fig. 1) oder Wälzlager 20 (untere Hälfte in Fig. 1) drehbar gelagert ist.

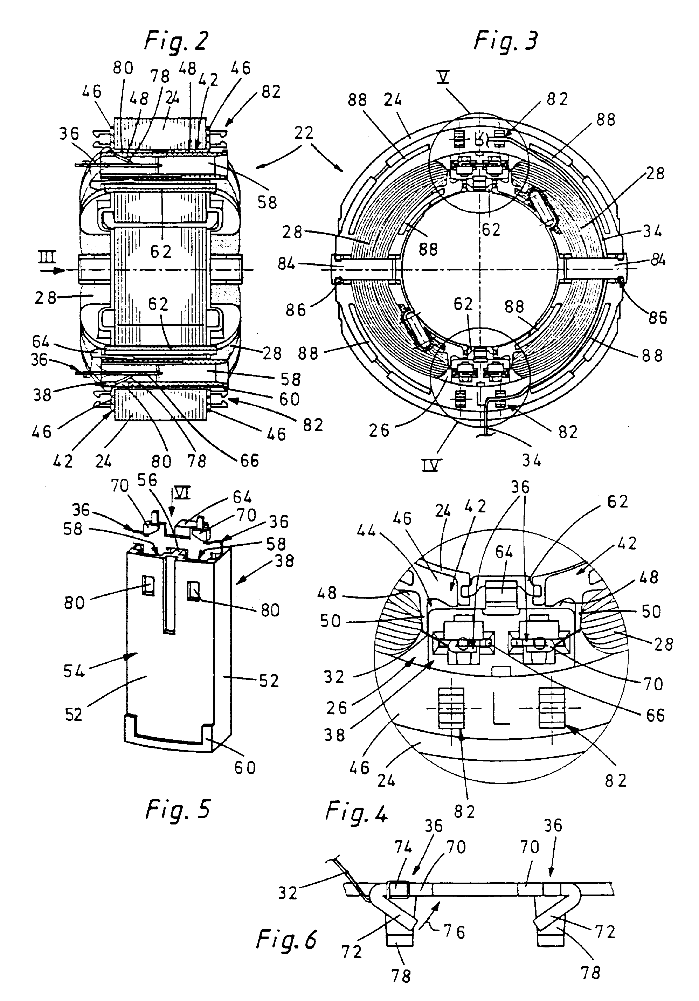

An dem Lagertragrohr 12 ist ein Stator 22 des Elektromotors 2 gehaltert. Wie sich genauer aus Fig. 2 und 3 ergibt, besteht dieser Stator 22 aus einem lamellierten Statorblechpaket 24 sowie aus in Nuten 26 des Statorblechpaketes 24 angeordneten Wicklungen 28. Der erfindungsgemäße Elektromotor 2 besitzt ferner eine Steckverbindungsanordnung 30 zum Verschalten von Drahtenden 32 der Wicklungen 28 mit Motor-Anschlußleitern 34. Die Steckverbindungsanordnung 30 weist aus Isoliermaterial bestehende und elektrische Verbinderelemente 36 halternde Halteteile 38 auf, wobei jedes Halteteil 38 im zwischen den Wicklungen 28 liegenden Bereich einer der Nuten 26 angeordnet ist. An den Verbinderelementen 36 sind einerseits die Drahtenden 32 der Statorwicklungen 28 angeschlossen sowie andererseits die Anschlußleiter 34 über Steckverbindungen 40 (Fig. 1) anschließbar.

Erfindungsgemäß sind nun die Halteteile 38 formschlüssig in von Isolier-Endscheiben 42 des Stators 22 gebildeten Einsteckaufnahmen 44 gehaltert. Die Einsteckaufnahmen 44 sind besonders gut in der Vergrößerung in Fig. 4 erkennbar.

Die Endscheiben 42 sind vorzugsweise als vorgeformte Kunststoffteile ausgebildet und bestehen jeweils aus einem auf einer Stirnseite des Statorblechpaketes 24 aufliegenden Scheibenabschnitt 46 sowie aus in axialer Richtung in die Nuten 26 eingreifenden und diese vollflächig auskleidenden Isolierstegen 48. Zudem greifen erfindungsgemäß die Endscheiben 42 durch die Nuten 26 hindurch insbesondere durch Überlappung der Isolierstege 48 im mittigen Bereich des Statorblechpaketes 24 formschlüssig ineinander (siehe insbesondere Fig. 1 und 2). Zur Bildung der erfindungsgemäßen Einsteckaufnahmen 44 für die Halteteile 38 sind an den vorzugsweise in radialer Richtung inneren Isolierstegen 48 der Endscheiben 42 einerseits axial verlaufende und andererseits sich etwa radial, parallel zueinander in die Nuten 26 erstreckende Führungsstege 50 angeordnet (Fig. 4).

Gemäß Fig. 5 besteht jedes Halteteil 38 zweckmäßigerweise aus einem im Querschnitt im wesentlichen rechteckigen, von vier Wandungen 52 gebildeten Gehäuse 54, welches vorzugsweise durch eine Zwischenwandung 56 in zwei axiale, beidseitig offene Aufnahmekammern 58 unterteilt ist, die jeweils ein Verbinderelement 36 enthalten.

Durch die erfindungsgemäße Ausgestaltung werden die Halteteile 38 somit in radialer Richtung formschlüssig zwischen den Isolierstegen 48 und in Umfangsrichtung zwischen den Führungsstegen 50 gehalten.

Zur in axialer Richtung formschlüssigen Halterung weist jedes Halteteil 38 gemäß Fig. 1 einendig einen radial nach außen weisenden und stirnseitig an dem Scheibenabschnitt 46 einer der Endscheiben 42 anliegenden, ersten Ansatz 60 (siehe auch Fig. 5) sowie anderendig einen radial nach innen weisenden und insbesondere ein Nutverschlußteil 62 axial hintergreifenden, zweiten Ansatz 64 auf. Das Nutverschlußteil 62 ist gemäß Fig. 4 als Streublech ausgebildet, welches in zwei Führungsnuten zweier einander gegenüberliegender Polspitzen des Statorblechpaketes 24 in axialer Richtung eingeschoben ist. Jeweils einer der Ansätze 60, 64, und zwar insbesondere der radial nach innen weisende, zweite Ansatz 64, kann zweckmäßigerweise zur Bildung einer schnappbaren Formschlußverbindung als in radialer Richtung federelastisch beweglicher Rasthaken ausgebildet sein. In diesem Fall kann vorteilhafterweise zuerst das Nutverschlußteil 62 montiert werden, und danach kann jeweils das Halteteil 38 in axialer Richtung in die Einsteckaufnahme 44 eingesteckt werden, bis der federelastische Rasthaken das Ende des Nutverschlußteils 62 rastend hintergreift. Im Falle von starr mit dem Halteteil 38 verbundenen Ansätzen 60, 64 werden demgegenüber zunächst die Halteteile 38 in die Einsteckaufnahmen 44 eingeschoben, und die formschlüssige Fixierung erfolgt danach durch Einschieben der Nutverschlußteile 62.

Bei der Steckverbindungsanordnung 30 des erfindungsgemäßen Elektromotors 2 erfolgt der Anschluß der Drahtenden 32 und der Anschlußleiter 34 auf axial gegenüberliegenden Seiten des Stators 22. Insbesondere werden die Anschlußleiter 34 auf der Seite des Motorflansches 10 und die Drahtenden 32 auf der axial gegenüberliegenden, dem Motorflansch 10 abgekehrten Seite angeschlossen. Hierzu bestehen die in den Halteteilen 38 gehalterten Verbinderelemente 36 jeweils aus einem innerhalb des Halteteils 38 angeordneten, insbesondere als Flachstecker ausgebildeten Steckabschnitt 66 zum Aufstecken eines mit dem Anschlußleiter 34 verbundenen Steckers 68 sowie einem das Halteteil 38 nach außen überragenden Verbindungsabschnitt 70 für das Drahtende 32 der Wicklung 28. Dabei sind die Drahtenden 32 stoffschlüssig, insbesondere durch Preßschweißen oder aber durch Verlöten, mit den Verbinderelementen 36 bzw. den Verbindungsabschnitten 70 verbunden. Gemäß Fig. 6 besitzt hierzu jeder Verbindungsabschnitt 70 einerseits eine umgebogene Klemmlasche 72 und eine oberhalb von dieser angeordnete Fixierungslasche 74, wobei das Wicklungsdrahtende 32 zwischen dem Verbindungsabschnitt 70 und der Klemmlasche 72 hindurch sowie zur vorläufigen Fixierung um die Fixierungslasche 74 geführt wird. Die elektrische Verbindung erfolgt dann vorzugsweise mittels Preßschweißen, wozu jeweils die Klemmlasche 72 in Pfeilrichtung 76 (Fig. 6) gegen den Verbindungsabschnitt 70 gepreßt und die Abschnitte gleichzeitig miteinander verschweißt werden. Durch diesen Schweißvorgang wird gleichzeitig die Isolation des Wickeldrahtes beseitigt, so daß eine elektrisch leitende Verbindung entsteht. Alternativ hierzu ist selbstverständlich eine Lötverbindung ebenfalls möglich.

Die Verbinderelemente 36 sind in den Halteteilen 38 vorzugsweise formschlüssig fixiert. Hierzu sind in den Aufnahmekammern 58 der Halteteile 38 zwei einander zugekehrte, gegenüberliegende Führungsnuten gebildet, in die die als Flachstecker ausgebildeten Verbinderelemente 36 einschiebbar sind. Zur Fixierung in axialer Richtung dienen abgebogene Federzungen 78 (Fig. 6), die in jeweils eine Aussparung 80 einer der Wandungen des Halteteil-Gehäuses 54 rastend eingreifen (Fig. 1 und 2).

In einer vorteilhaften Weiterbildung der Erfindung weisen die Endscheiben 42 in den Halteteilen 38 benachbarten Bereichen Klemmhalterungen 82 zum Fixieren der von außen zugeführten Anschlußleiter 34 auf. Jede dieser Klemmhalterungen 82 ist durch zwei sich axial von den Scheibenabschnitten 46 erstreckende Klemmfinger gebildet, zwischen denen der Anschlußleiter 34 klemmend gehalten wird. Wie beispielhaft in Fig. 3 dargestellt ist, kann über diese Klemmhalterungen 82 zur Verschaltung der Statorwicklungen 28 der oder die Anschlußleiter 34 von einer Zuführseite hinüber auf die radial gegenüberliegende Seite des Stators geführt werden. In Fig. 3 ist dies allerdings lediglich zur Veranschaulichung eingezeichnet, obwohl die Anschlußleiter in Wirklichkeit auf der in dieser Figur nicht erkennbaren Stirnseite des Stators angeordnet sind.

In der dargestellten, bevorzugten Ausführungsform der Erfindung weisen die Endscheiben 42 weiterhin im Bereich der Wicklungen 28 Fixierungslaschen 84 auf, die jeweils einendig einstückig über ein Filmscharnier derart schwenkbeweglich befestigt sind, daß sie in radialer Richtung über die Wicklungen 28 hinweg umklappbar und mit ihren freien Enden über Rastmittel 86 befestigbar sind (siehe insbesondere Fig. 3). Mit diesen Fixierungslaschen 84 lassen sich dann vorteilhafterweise auch die zum Verschalten auf die gegenüberliegende Seite geführten Anschlußleiter 34 zusammen mit den Wicklungen fixieren.

Zur weiteren Fixierung der Wicklung besitzen die Endscheiben 42 vorteilhafterweise in radialer Richtung beidseitig der Wicklungen 28 sich in axialer sowie umfänglicher Richtung erstreckende Führungsstege 88. Die zum Verschalten herumgeführten Anschlußleiter 34 verlaufen vorzugsweise gemäß Fig. 3 zwischen der Wicklung und den in radialer Richtung äußeren Führungsstegen 88.

Wie sich des weiteren noch aus Fig. 1 entnehmen läßt, ist in dem Motorflansch 10 eine Anschlußöffnung gebildet, die mit einem aufrastbaren Deckel 90 verschließbar ist. Hierbei erstrecken sich die Anschlußöffnung und der Deckel 90 vorzugsweise bis über den zentrischen Bereich der Läufer-Lagerung 18, 20, so daß durch Entfernen des Deckels 90 sowohl der Anschlußbereich als auch der Lagerbereich von außen zugänglich sind.

Aufgrund der erfindungsgemäßen Ausgestaltung ist die Montage des Motors 2 außerordentlich einfach und schnell durchführbar. Zunächst werden auf die stirnseitigen Enden des Statorblechpaketes jeweils eine Endscheibe aufgeschoben. Diese Endscheiben gewährleisten eine durchgehende Isolierung des Wickelbereiches für die nachfolgend in die Nuten eingebrachten Wicklungen. Es werden nun die bereits mit den Verbinderelementen bestückten Halteteile in die Einsteckaufnahmen eingeschoben. Und entweder - wie bereits beschrieben - über eine schnappbare Formschlußverbindung oder über die eingeschobenen Nutverschlußteile fixiert. Es erfolgt dann der Anschluß der Wicklungsdrahtenden an den Verbinderelementen, und abschließend werden die Motor-Anschlußleiter nach Fertigstellung des Motors mit ihren Steckern auf die Verbinderelemente aufgesteckt.

## Patentansprüche

1. Elektromotor (2) mit einem aus einem Statorblechpaket (24) sowie in Nuten (26) des Statorblechpaketes (24) angeordneten Wicklungen (28) bestehenden Stator (22) und mit einer Steckverbindungsanordnung (30) zum Verschalten von Drahtenden (32) der Wicklungen (28) mit Motor-Anschlußleitern (34), wobei die Steckverbindungsanordnung (30) aus Isoliermaterial bestehende und elektrische Verbinderelemente (36) halternde Halteteile (38) aufweist und jedes Halteteil (38) im zwischen den Wicklungen (28) liegenden Bereich einer der Nuten (26) in einer von Isolier-Endscheiben (42) gebildeten Einsteckaufnahme (44) angeordnet ist, und wobei an den Verbinderelementen (36) einerseits die Drahtenden (32) angeschlossen und andererseits die Anschlußleiter (34) über Steckverbindungen (40) anschließbar sind,
**dadurch gekennzeichnet, daß** die Isolier-Endscheiben (42) jeweils aus einem auf einer Stirnseite des Statorblechpaketes (24) aufliegenden Scheibenabschnitt (46) und aus in axialer Richtung in die Nuten (26) eingreifenden und diese auskleidenden Isolierstegen (48) bestehen, wobei die Isolierstege (48) zur Bildung der Einsteckaufnahmen (44) für die Halteteile (38) axial verlaufende und sich etwa radial, parallel zueinander in die Nuten (26) erstreckende Führungsstege (50) aufweisen und die Halteteile (38) formschlüssig in den Einsteckaufnahmen (44) gehaltert sind.

2. Elektromotor nach Anspruch 1,
**dadurch gekennzeichnet,** daß die Isolier-Endscheiben (42) als vorgeformte Kunststoffteile ausgebildet sind.

3. Elektromotor nach Anspruch 1 oder 2,
**dadurch gekennzeichnet,** daß die Endscheiben (42) durch die Nuten (26) hindurch insbesondere durch Überlappung der Isolierstege (48) formschlüssig ineinandergreifen.

4. Elektromotor nach einem oder mehreren der Ansprüche 1 bis 3,
**dadurch gekennzeichnet,** daß die Halteteile (38) aus jeweils einem im Querschnitt im wesentlichen rechteckigen, von vier Wandungen (52) gebildeten Gehäuse (54) bestehen, welches vorzugsweise durch eine Zwischenwandung (56) in zwei axiale, beidseitig offene Aufnahmekammern (58) unterteilt ist, die jeweils ein Verbinderelement (36) enthalten.

5. Elektromotor nach einem oder mehreren der Ansprüche 1 bis 4,
**dadurch gekennzeichnet,** daß die Halteteile (38) zur in axialer Richtung formschlüssigen Halterung jeweils einendig mindestens einen radial nach außen weisenden und stirnseitig an einer der Endscheiben (42) anliegenden, ersten Ansatz (60) sowie anderendig mindestens einen radial nach innen weisenden und insbesondere ein Nutverschlußteil (62) axial hintergreifenden, zweiten Ansatz (64) aufweisen.

6. Elektromotor nach Anspruch 5,
**dadurch gekennzeichnet,** daß jeweils einer der Ansätze ((60, 64) des Halteteils, insbesondere der radial nach innen weisende zweite Ansatz (64), zur Bildung einer schnappbaren Formschlußverbindung als in radialer Richtung federelastisch beweglicher Rasthaken ausgebildet ist.

7. Elektromotor nach einem oder mehreren der Ansprüche 1 bis 6,
**dadurch gekennzeichnet,** daß die Anschlußleiter (34) auf einer Stirnseite des Stators (22), insbesondere auf der Seite eines den Stator (22) tragenden Motorflansches (10), und die Drahtenden (32) auf der axial gegenüberliegenden Seite angeschlossen sind.

8. Elektromotor nach einem oder mehreren der Ansprüche 1 bis 7,
**dadurch gekennzeichnet,** daß die Verbinderelemente (36) jeweils aus einem innerhalb des Halteteils (38) angeordneten Steckabschnitt (66) zum Aufstecken eines mit dem Anschlußleiter (34) verbundenen Steckers (68) sowie einem das Halteteil (38) nach außen überragenden Verbindungsabschnitt (70) für das Drahtende (32) bestehen.

9. Elektromotor nach einem oder mehreren der Ansprüche 1 bis 8,
**dadurch gekennzeichnet,** daß die Drahtenden (32) stoffschlüssig, insbesondere durch Preßschweißen oder Verlöten, mit den Verbinderelementen (36) verbunden sind.

10. Elektromotor nach einem oder mehreren der Ansprüche 1 bis 9,
**dadurch gekennzeichnet,** daß die Verbinderelemente (36) in den Halteteilen (38) formschlüssig fixiert sind.

11. Elektromotor nach einem oder mehreren der Ansprüche 1 bis 10,
**dadurch gekennzeichnet,** daß die Endscheiben (42) insbesondere in an die Halteteile (38) angrenzenden Bereichen Klemmhalterungen (82) zum Fixieren der Anschlußleiter (34) aufweisen.

12. Elektromotor nach einem oder mehreren der Ansprüche 1 bis 11,
**dadurch gekennzeichnet,** daß die Endscheiben (42) im Bereich der Wicklungen (28) Fixierungslaschen (84) aufweisen, die jeweils einendig insbesondere einstückig über ein Filmscharnier derart schwenkbeweglich befestigt sind, daß sie in radialer Richtung über die Wicklungen (28) hinweg umklappbar und mit ihren freien Enden über Rastmittel (86) befestigbar sind.

13. Elektromotor nach einem oder mehreren der Ansprüche 1 bis 12,
**dadurch gekennzeichnet,** daß die Endscheiben (42) in radialer Richtung beidseitig der Wicklungen (28) sich in axialer sowie umfänglicher Richtung erstreckende Führungsstege (88) aufweisen.

14. Elektromotor nach einem oder mehreren der Ansprüche 1 bis 13,
**dadurch gekennzeichnet,** daß in einem mit dem Stator verbundenen Motorflansch (10) eine Anschlußöffnung gebildet ist, die mit einem aufrastbaren Deckel (90) verschließbar ist.

15. Elektromotor nach Anspruch 14,
**dadurch gekennzeichnet,** daß sich die Anschlußöffnung und der Deckel (90) bis über den zentrischen Bereich einer Läufer-Lagerung (18, 20) erstrecken.

## Claims

1. Electric motor (2) comprising a stator (22) having a stator plate lamination packet (24) and windings (28) located in grooves (26) of the stator plate lamination packet (24), and with a plug connection arrangement (30) for connecting wire ends (32) of the windings (28) with motor connector leads (34) is provided with retaining elements (38), wherein the plug connection arrangement (30) made of insulating and electrical plug connector elements (36), and each retaining element (38) is arranged in the region of one of the grooves (26) between the windings (28) in a receptacle (44) of an insulating end disc (42), and wherein on one side the connector elements (36) are locked to the wire ends (32) and on the other side of the plug connector elements (36), plug into the connector leads (34) over the plug connectors (40) **characterised in that** the insulating end discs (42) are each made of a disc section (46) lying on one front face of the stator plate lamination packet (24) and further comprise insulating bars (48) extending in an axial direction into the grooves (26) whereby the insulating bars (48) having axially extending guide bars (50) and the insulating bars (48) for making up the receptacles (44) extend axially and somewhat radially parallel to each other in the grooves (26) and the retaining elements (38) are held as a form fit in the receptacles (44).

2. Electric motor according to Claim 1, **characterised in that** the insulating end discs (42) are built of preformed plastic parts.

3. Electric motor according to Claim 1 or 2, **characterised in that** the end discs (42) engage with each other form fittingly through the grooves (26) especially by overlapping the insulating bars (48).

4. Electric motor according to one or more of Claims 1 to 3, **characterised in that** the retaining elements (38) each have an essentially rectangular cross section housing (54) formed by four walls (52), which is preferably divided by an intermediate wall (56) into two axial receiving chambers (58) open on both sides, each containing one connector element (36).

5. Electric motor according to one or more of Claims 1 to 4, **characterised in that** the retaining elements (38) for form-fitted mounting in the axial direction have at one end at least one radially outward-pointing lug (60) touching the front face of one of the end discs (42), and have on the other end at least one radially inward-pointing lug (64) extending especially axially behind a groove closing part (62).

6. Electric motor according to Claim 5, **characterised in that** one of the lugs (60,64) of the retaining element especially the radially inner second lug (64) is shaped as a snap hook moving under spring tension in a radial direction, to form a snap-in, form-fitted connection.

7. Electric motor according to one or more of Claims 1 to 6, **characterised in that** the connector leads (34) are connected to a front side of the stator (22), especially the side of a motor flange (10) bearing the stator (22), and the wire end (32) are connected on the axially opposite side.

8. Electric motor according to one or more of Claims 1 to 7, **characterised in that** the connector elements (36) each comprise a plug section (66) located on the inner part of the retaining elements (38) for plugging in a plug (68) connected to the connector leads (34) and a connector segment (70) for the wire end (32) extending outward over the retaining element (38).

9. Electric motor according to one or more of Claims 1 to 8, **characterised in that** the wire ends (32) are joined to the connector elements (36) by a body closure, especially by press welding or soldering.

10. Electric motor according to one or more of Claims 1 to 9, **characterised in that** the connector elements (36) are form-fitted in the retaining elements (38).

11. Electric motor according to one or more of Claims 1 to 10, **characterised in that** the end discs (42) have clamp mounts (82) for fixing the connector leads (34) especially in borders bounding the retaining elements (38).

12. Electric motor according to one or more of Claims 1 to 11, **characterised in that** the end discs (42) have mounting plates (84) in the region of the windings (28) which are mounted on one end via a film hinge joint allowing a pivot motion so that they can be folded away in a radial direction over the windings (28) and can be attached by their free ends via snap means (86).

13. Electric motor according to one or more of Claims 1 to 12, **characterised in that** the end discs (42) have guide bars (88) extending radially on both sides of the windings (28) in an axial and circumferential direction.

14. Electric motors according to one or more of Claims 1 to 13, **characterised in that** a connection opening is formed in a motor flange (10) connected with the stator, the connection opening being closeable by a snappable cover (90).

15. Electric motor according to one or more of Claims 1 to 14, **characterised in that** the connection opening and cover (90) extend out beyond the central region of a rotor bearing (18, 20).

## Revendications

1. Moteur électrique (2) avec stator (22) constitué d'un empilage de stator (24) ainsi que d'enroulements (28) placés dans des rainures (26) de l'empilage de stator (24), et avec un système de liaison par fiche (30) pour connecter des extrémités de câbles (32) des enroulements (28) à des conducteurs de raccordement de moteur (34), le système de liaison à fiche (30) présentant des pièces de maintien (38) constituées d'un matériau isolant et soutenant des éléments de raccordement électrique (36) et chaque pièce de maintien (38) étant placée dans la zone située entre les enroulements (28) de l'une des rainures (26) dans un logement d'insertion (44) formé de disques d'extrémité isolants (42), et dans lequel, sur les éléments de raccordement (36), sont raccordées d'une part les extrémités de fil (32) et peuvent se raccorder d'autre part le conducteur de branchement (34) par l'intermédiaire de liaisons à fiches (40), caractérisé en ce que les disques d'extrémité isolants (42) sont constitués chacun d'une section de disque (46) reposant sur une face frontale de l'empilage de stator (24) et de barres isolantes (48) s'engageant dans la direction axiale dans les rainures (26) et garnissant celles-ci, les barres isolantes (48) présentant, pour la formation des logements d'insertion (44) pour les pièces de maintien (38), des barres de guidage (50) orientées dans le sens axial et s'étendant approximativement dans le sens radial, parallèlement les unes aux autres, dans les rainures (26), et les pièces de maintien (38) étant maintenues par engagement positif dans les logements d'insertion (44).

2. Moteur électrique selon la revendication 1, caractérisé en ce que les disques d'extrémité isolants (42) sont conformés en pièces préformées en matière synthétique.

3. Moteur électrique selon la revendication 1 ou 2, caractérisé en ce que les disque d'extrémité (42) s'engagent les uns dans les autres en engagement positif à travers les rainures (26), en particulier par chevauchement des barres isolantes (48).

4. Moteur électrique selon l'une ou plusieurs des revendications 1 à 3, caractérisé en ce que les pièces de maintien (38) sont constituées d'un boîtier respectif (54) de section transversale pour l'essentiel rectangulaire, formé de quatre parois (52), lequel boîtier est divisé de préférence par une paroi intermédiaire (56) en deux chambres de réception (58) axiales ouvertes des deux côtés, qui contiennent un élément de raccordement (36).

5. Moteur électrique selon l'une ou plusieurs des revendications 1 à 4, caractérisé en ce que les parties de maintien (38), dans le but d'un soutien par engagement positif dans la direction axiale, présentent chacune à une extrémité au moins un premier épaulement (60) tourné vers l'extérieur dans le sens radial et appuyé du côté frontal contre l'un des disques d'extrémité (42), ainsi qu'à l'autre extrémité un deuxième épaulement (64) tourné vers l'intérieur dans le sens radial et en particulier saisissant par le dessous dans le sens axial une partie de fermeture à rainure (62).

6. Moteur électrique selon la revendication 5, caractérisé en ce qu'à chaque fois l'un des épaulements (60, 64) de la partie de maintien, en particulier le deuxième épaulement (64) tourné vers l'intérieur dans le sens radial, dans le but de former un assemblage à engagement positif encliquetable, est conformé en crochet d'arrêt mobile de manière élastique dans la direction radiale.

7. Moteur électrique selon l'une ou plusieurs des revendications 1 à 6, caractérisé en ce que les conducteurs de branchement (34) sont branchés sur une face frontale du stator (22), en particulier sur la face d'une bride de moteur (10) portant le stator, et les extrémités de câble (32) sont branchées sur la face opposée dans le sens axial.

8. Moteur électrique selon l'une ou plusieurs des revendications 1 à 7, caractérisé en ce que les éléments de raccordement (36) sont constitués chacun d'une section de fiche (66) placée à l'intérieur de la partie de maintien (38) pour l'insertion d'une fiche (68) reliée au conducteur de branchement (34), ainsi que d'une section de raccordement (70), dépassant de la partie de maintien (38) vers l'extérieur, pour l'extrémité de câble (32).

9. Moteur électrique selon l'une ou plusieurs des revendications 1 à 8, caractérisé en ce que les extrémités de câble (32) sont reliées aux éléments de raccordement (36) par adhérence de matière, en particulier par soudage par pression ou brasage.

10. Moteur électrique selon l'une ou plusieurs des revendications 1 à 9, caractérisé en ce que les éléments de raccordement (36) sont fixés par engagement positif dans les parties de maintien (38).

11. Moteur électrique selon l'une ou plusieurs des revendications 1 à 10, caractérisé en ce que les disques d'extrémité (42), en particulier dans les zones adjacentes aux parties de maintien (38), présentent des supports de bornes (82) pour fixer les conducteurs de branchement (34).

12. Moteur électrique selon l'une ou plusieurs des revendications 1 à 11, caractérisé en ce que les disques d'extrémité (42), au niveau des enroulements (28), présentent des pattes de fixation (84), qui sont fixées chacune à une extrémité en particulier d'un seul tenant, par l'intermédiaire d'une charnière à film, de manière mobile en pivotement, de telle manière qu'elles peuvent être basculées dans la direction radiale au-dessus des enroulements (28) et peuvent être fixées avec leurs extrémités libres par l'intermédiaire de moyens d'arrêt (86).

13. Moteur électrique selon l'une ou plusieurs des revendications 1 à 12, caractérisé en ce que les disques d'extrémité (42) présentent dans la direction radiale, des deux côtés des enroulements (28), des barres de guidage (88) s'étendant dans la direction axiale et dans celle de la circonférence.

14. Moteur électrique selon l'une ou plusieurs des revendications 1 à 13, caractérisé en ce que, dans une bride de moteur (10) reliée au stator, il est formé une ouverture de branchement, qui peut être fermée avec un couvercle encliquetable (90).

15. Moteur électrique selon la revendication 14, caractérisé en ce que l'ouverture de branchement et le couvercle (90) s'étendent jusqu'au-dessus de la zone centrale d'un support de patin (18, 20).
